# EUROPÄISCHE PATENTSCHRIFT

(11) **EP 3 545 195 B1**
(45) Veröffentlichungstag und Bekanntmachung des Hinweises auf die Patenterteilung: **30.12.2020**
(21) Anmeldenummer: 18712812.9
(22) Anmeldetag: 09.03.2018
(51) Int. Cl.: F04C 29/00, F04C 18/02

(54) **VERDRÄNGERMASCHINE NACH DEM SPIRALPRINZIP, VERFAHREN ZUM BETREIBEN EINER VERDRÄNGERMASCHINE, VERDRÄNGERSPIRALE, FAHRZEUGKLIMAANLAGE UND FAHRZEUG**
SPIRAL-TYPE POSITIVE DISPLACEMENT DEVICE, METHOD FOR OPERATING A POSITIVE DISPLACEMENT DEVICE, POSITIVE DISPLACEMENT SPIRAL, VEHICLE AIR-CONDITIONING SYSTEM, AND VEHICLE
MACHINE À DÉPLACEMENT POSITIF SELON LE PRINCIPE DE LA SPIRALE, PROCÉDÉ DE FONCTIONNEMENT D'UNE MACHINE À DÉPLACEMENT POSITIF, SPIRALE À DÉPLACEMENT POSITIF, INSTALLATION DE CLIMATISATION DE VÉHICULE ET VÉHICULE

(30) Priorität: 10.03.2017 DE 102017105175
(43) Veröffentlichungstag der Anmeldung: 02.10.2019
(73) Patentinhaber: OET GmbH, 6890 Lustenau (AT)
(72) Erfinder: OBRIST, Frank, 6900 Bregenz (AT); SCHMÄLZLE, Christian, 6923 Lauterach (AT); BUSCH, Christian, 6800 Feldkirch (AT)
(74) Vertreter: Kilchert, Jochen
(86) Internationale Anmeldenummer: PCT/EP2018/055908
(87) Internationale Veröffentlichungsnummer: WO 2018/162713

(56) Entgegenhaltungen:
- EP-A1- 2 474 740
- DE-A1-102012 104 045
- US-A1- 2012 230 854
- US-A1- 2014 119 971

## Beschreibung

Die Erfindung betrifft eine Verdrängermaschine nach dem Spiralprinzip, insbesondere einen Scrollverdichter, mit einem Hochdruckbereich, der eine Hochdruckkammer umfasst, des Weiteren mit einer Niederdruckkammer und einer orbitierenden Verdrängerspirale, die in eine Gegenspirale derart eingreift, dass zwischen der Verdrängerspirale und der Gegenspirale Verdichtungskammern gebildet werden, um ein Arbeitsmedium aufzunehmen, wobei zwischen der Niederdruckkammer und der Verdrängerspirale eine Gegendruckkammer ausgebildet ist. Des Weiteren betrifft die Erfindung eine Verdrängerspirale für eine Verdrängermaschine nach dem Spiralprinzip, insbesondere für einen Scrollverdichter. Ferner betrifft die Erfindung ein Verfahren zum Betreiben einer Verdrängermaschine. Außerdem betrifft die Erfindung eine Fahrzeugklimaanlage sowie ein Fahrzeug mit einer erfindungsgemäßen Verdrängermaschine.

Scrollverdichter und/oder Scrollexpander sind aus dem Stand der Technik hinlänglich bekannt. Diese umfassen eine Hochdruckkammer, eine Niederdruckkammer und eine orbitierende Verdrängerspirale. Die orbitierende Verdrängerspirale greift, wie dies beispielsweise in EP 2 806 164 A1 dargestellt ist, in eine Gegenspirale derart ein, dass zwischen der Verdrängerspirale und der Gegenspirale Verdichtungskammern gebildet werden, um ein Arbeitsmedium aufzunehmen. Zwischen der Niederdruckkammer und der Verdrängerspirale ist ein Aufnahmeraum, nämlich eine Gegendruckkammer, ausgebildet. Eine derartige Gegendruckkammer ist auch unter dem Begriff Back-Pressure-Raum bekannt. Mit Hilfe der Gegendruckkammer bzw. mit Hilfe des Back-Pressure-Raums ist es möglich, einen Druck aufzubauen, der auf die orbitierende Verdrängerspirale wirkt. Es entsteht eine resultierende Kraft in axialer Richtung, wodurch die Verdrängerspirale gegen die Gegenspirale gedrückt wird und somit die Spiralen zueinander abgedichtet werden.

US 2012/0230854 A1 beschreibt einen Scrollverdichter mit einer Verdrängerspirale, einer Gegenspirale und einer Gegendruckkammer bzw. einem Back-Pressure-Raum. Um in der Gegendruckkammer befindliches Öl, das zum Schmieren von Lagern im Scrollverdichter genutzt wird, abführen zu können, ist ein u-förmiger Verbindungskanal in der Verdrängerspirale ausgebildet. Der Verbindungskanal umfasst einen Eingang, der in die Verdichtungskammer, die zwischen der Gegenspirale und der Verdrängerspirale ausgebildet ist, mündet. Ferner ist ein mit dem Eingang über einen Zwischenkanal verbundener Ausgang vorgesehen, der in die Gegendruckkammer mündet. Der Eingang und der Ausgang werden wegen der Rotation der Verdrängerspirale intermittierend geschlossen bzw. geöffnet, so dass das Öl aus der Gegendruckkammer sicher in die Verdichtungskammer und von dort über einen Auslass abgeführt wird.

Der Erfindung liegt die Aufgabe zu Grunde, eine Verdrängermaschine nach dem Spiralprinzip derart weiterzubilden, dass der Druck in der Gegendruckkammer in vorteilhafter Weise selbst einstellbar ist. Es soll ein variables Back-Pressure-System bzw. ein variables Gegendruck-System bereitgestellt werden, wobei der Druck in der Gegendruckkammer aufgrund unterschiedlicher Betriebsdrücke einstellbar ist. Der Erfindung liegt ferner die Aufgabe zu Grunde, eine weiterentwickelte Verdrängerspirale anzugeben. Ferner besteht die Aufgabe darin, ein weiterentwickeltes Verfahren zum Betreiben einer Verdrängermaschine anzugeben. Außerdem besteht die Aufgabe darin, eine Fahrzeugklimaanlage und/oder ein Fahrzeug mit einer weiterentwickelten Verdrängermaschine nach dem Spiralprinzip anzugeben.

Erfindungsgemäß wird diese Aufgabe im Hinblick auf die Verdrängermaschine nach dem Spiralprinzip durch den Gegenstand des Patentanspruches 1, im Hinblick auf die Verdrängerspirale durch den Gegenstand des Patentanspruches 9, im Hinblick auf das Verfahren zum Betreiben einer Verdrängermaschine durch
Patentanspruch 10, im Hinblick auf die Fahrzeugklimaanlage durch den Gegenstand des Patentanspruches 12 und im Hinblick auf das Fahrzeug durch den Gegenstand des Patentanspruches 13 gelöst.

Vorteilhafte und zweckmäßige Ausgestaltungen der erfindungsgemäßen Verdrängermaschine nach dem Spiralprinzip und/oder des erfindungsgemäßen Verfahrens zum Betreiben einer Verdrängermaschine sind in den Unteransprüchen angegeben.

Die Erfindung beruht auf dem Gedanken, eine Verdrängermaschine nach dem Spiralprinzip, insbesondere einem Scrollverdichter, mit einer Hochdruckkammer, einer Niederdruckkammer und einer orbitierenden Verdrängerspirale, die in eine Gegenspirale derart eingreift, dass zwischen der Verdrängerspirale und der Gegenspirale Verdichtungskammern gebildet werden, um ein Arbeitsmedium aufzunehmen, anzugeben. Zwischen der Niederdruckkammer und der Verdrängerspirale ist eine Gegendruckkammer bzw. ein sogenannter Back-Pressure-Raum ausgebildet.

Erfindungsgemäß weist die Verdrängerspirale mindestens zwei Durchgänge auf, die temporär eine Fluidverbindung zwischen der Gegendruckkammer und zumindest einer der Verdichtungskammern herstellen, wobei ein erster Durchgang im Wesentlichen in einem mittleren Abschnitt der Verdrängerspirale ausgebildet ist und mindestens ein zweiter Durchgang im Anfangsbereich der Verdrängerspirale ausgebildet ist.

Die Ausbildung der mindestens zwei Durchgänge bewirkt eine Fluidverbindung bzw. Gasverbindung zwischen mindestens einer der Verdichtungskammern und der Gegendruckkammer. Aufgrund dessen kann ein Back-Pressure-System bzw. ein Gegendruck-System zur Verfügung gestellt werden, wobei der Druck in der Gegendruckkammer durch einen Abgleich zwischen dem Hochdruck und dem Saugdruck bzw. Niederdruck der Verdrängermaschine einstellbar ist.

Vorzugsweise ist die Gegenspirale vollständig fest in die Verdrängermaschine eingebaut. Mit anderen Worten ist die Gegenspirale weder in axialer Richtung beweglich, noch drehbar beweglich. Die Verdrängerspirale ist relativ zur Gegenspirale in axialer Richtung beweglich. Somit kann die orbitierende, also die drehbar-bewegliche Verdrängerspirale zusätzlich in axialer Richtung beweglich sein. Hierbei kann die Verdrängerspirale in Richtung der Gegenspirale und von der Gegenspirale weg bewegt werden.

Ein von der Verdrängerspirale auf die Gegenspirale in axialer Richtung wirkender Anpressdruck ist durch den beschriebenen, in der Gegendruckkammer herrschenden Druck einstellbar. Mit anderen Worten wird die von der Verdrängerspirale in axialer Richtung auf die Gegenspirale wirkende Kraft vorzugsweise durch den in der Gegendruckkammer herrschenden Druck bewirkt. In Abhängigkeit von dem in der Gegendruckkammer herrschenden Druck kann ein von der Verdrängerspirale auf die Gegenspirale in axialer Richtung wirkender Anpressdruck eingestellt werden.

Vorzugsweise wirkt die Verdrängerspirale immer mit einem gewissen Anpressdruck auf die Gegenspirale, sodass die Dichtigkeit der Anordnung der beiden Spiralen gewährleistet ist. Der Anpressdruck auf die Gegenspirale ist vorzugsweise derart eingestellt, dass kein höherer Anpressdruck auf die Gegenspirale wirkt, als dieser für die Dichtigkeit im aktuellen Betriebspunkt (Betriebsdrücke/Drehzahl) des Verdichters notwendig ist. Ein diesbezüglich erhöhter Anpressdruck würde zu Leistungseinbußen der Verdrängermaschine führen.

Zwischen der Verdrängerspirale und der Gegenspirale werden radial nach innen wandernde Verdichtungskammern gebildet, um ein Arbeitsmedium, insbesondere ein Kältemittel, aus der Niederdruckkammer aufzunehmen, insbesondere anzusaugen, zu verdichten und in die Hochdruckkammer auszustoßen. Die Verdrängermaschine arbeitet gemäß dieser Ausführungsform der Erfindung insbesondere als Scrollverdichter. Diese Verdrängermaschine ist mit anderen Worten ein Scrollkompressor.

Der erste Durchgang und/oder der mindestens zweite Durchgang ist/sind vorzugsweise in einem Abschnitt des Bodens der Verdrängerspirale ausgebildet. Dies bedeutet, dass der erste Durchgang und/oder der zweite Durchgang insbesondere nicht in den Spiralflankenabschnitten der Verdrängerspirale ausgebildet sind.

Der erste Durchgang und/oder der mindestens zweite Durchgang ist/sind vorzugsweise als in Bezug auf den Boden der Verdrängerspirale im Wesentlichen senkrecht ausgebildete(r) Durchgang bzw. Durchgänge ausgebildet. Vorzugsweise handelt es sich bei dem ersten Durchgang und/oder dem mindestens zweiten Durchgang um eine Bohrung bzw. Bohrungen. Der erste Durchgang weist dabei vorzugsweise einen Durchmesser von 0,1 mm - 1,0 mm auf. Der mindestens zweite Durchgang weist vorzugsweise einen Durchmesser von 0,1 mm - 1,0 mm auf.

Als mittlerer Abschnitt der Verdrängerspirale ist insbesondere ein derartiger Abschnitt der Verdrängerspirale zu verstehen, der zwar nicht den Mittelpunkt der Verdrängerspirale bildet, jedoch in Nähe zum Mittelpunkt der Verdrängerspirale ausgebildet ist. Der mittlere Abschnitt ist dabei zwischen zwei Flanken der Verdrängerspirale gebildet. Beispielsweise ist der erste Durchgang mittig zwischen zwei Flankenabschnitten ausgebildet. Des Weiteren ist es möglich, dass der erste Durchgang in Relation zu zwei Flankenabschnitten außermittig angeordnet ist.

Der erste Durchgang ist vorzugsweise ist einer ersten Spiralwindung in Relation zum Mittelpunkt der Verdrängerspirale ausgebildet.

Der zweite Durchgang der Verdrängerspirale ist vorzugsweise in einer zweiten und/oder einer äußersten Spiralwindung der Verdrängerspirale in Relation zum Mittelpunkt der Verdrängerspirale ausgebildet. Der Anfangsbereich der Verdrängerspirale beschreibt insbesondere den Bereich der Verdrängerspirale, in den das Kältemittel aus der Niederdruckkammer aufgenommen, insbesondere angesaugt, wird. Der Anfangsbereich kann auch als Ansaugbereich bezeichnet werden.

Bei dem Anfangsbereich der Verdrängerspirale handelt es sich um den zwischen zwei Flanken der Verdrängerspirale ausgebildeten ersten Strömungsabschnitt des angesaugten Kältemittels.

Vorzugsweise liegen der erste Durchgang und der zweite Durchgang in Relation zum Mittelpunkt der Verdrängerspirale nicht auf einer gemeinsamen Geraden, sondern sind versetzt zum Mittelpunkt angeordnet.

Bei der Erfindung ist der erste Durchgang in einem derartigen Abschnitt der Verdrängerspirale ausgebildet, in dem der erste Durchgang im aktivierten Zustand der Verdrängermaschine bei Erreichen von 95 % - 85 %, insbesondere bei Erreichen von 92 % - 88 %, insbesondere bei Erreichen von 90 %, des relativen Verdichtungskammervolumens geöffnet ist, und während einer nach der Öffnung anschließenden Rotation der Verdrängerspirale um einen Rotationswinkel von 180° - 360°, insbesondere von 255° - 315°, insbesondere von 270°, geöffnet bleibt. Bei diesem beschriebenen Abschnitt, in dem sich der erste Durchgang befindet, handelt es sich vorzugsweise um den beschriebenen mittleren Abschnitt der Verdrängerspirale. Mit anderen Worten kann die Verdrängerspirale nach dem Öffnen des ersten Durchgangs um weitere 180° - 360°, insbesondere weitere 255° - 315°, insbesondere um weitere 270°, gedreht werden, währenddessen der erste Durchgang geöffnet bleibt. Ein Öffnungszustand des ersten Durchgangs beschreibt, dass der erste Durchgang nicht durch die Gegenspirale, insbesondere nicht durch das Spiralelement bzw. durch einen Spiralflankenabschnitt, abgedeckt ist.

Der zweite Durchgang ist vorzugsweise in einem derartigen Abschnitt der Verdrängerspirale ausgebildet, in dem der zweite Durchgang bei Erreichen des maximalen relativen Verdichtungskammervolumens, geschlossen ist, und während einer der Schließung vorangegangenen Rotation der Verdrängerspirale um einen Rotationswinkel von 180° - 360°, insbesondere von 255° - 315°, insbesondere von 270°, geöffnet ist. Das maximale Verdichtungskammervolumen entspricht einem zugeordneten Rotationswinkel (αVmax) der Verdrängerspirale. Bezüglich des zugeordneten Rotationswinkels ist ein Tolaranzbereich von +/- 30° möglich. Mit anderen Worten ist der zweite Durchgang bei Erreichen des Rotationswinkels αVmax +/- 30° geschlossen.

Mit anderen Worten wird der zweite Durchgang 61 der Verdrängerspirale vor Beginn des Verdichtungsprozesses verschlossen. Demnach ist der zweite Durchgang mindestens bei dem 0°-Winkel der Verdrängermaschine geschlossen. Vorzugsweise erfolgt das Schließen des zweiten Durchgangs 61 bereits vor dem Erreichen des 0°-Winkels der Verdrängermaschine.

Insbesondere ist der zweite Durchgang bei Erreichen des maximalen relativen Verdichtungskammervolumens geschlossen. Vorab, d.h. vor dem Erreichen des Wertes, ist der zweite Durchgang geöffnet. Vor dem Schließen des zweiten Durchgangs kann der zweite Durchgang während der Durchführung einer Rotation der Verdrängerspirale um einen Rotationswinkel von 180° - 360°, insbesondere von 255° - 315°, insbesondere von 270°, geöffnet sein. Auch in diesem Zusammenhang gilt, dass die Öffnung des zweiten Durchgangs einen Zustand beschreibt, in dem der zweite Durchgang nicht durch die Gegenspirale, insbesondere nicht durch einen Flankenabschnitt der Gegenspirale abgedeckt bzw. verschlossen ist.

Des Weiteren ist es möglich, dass der erste Durchgang bei einem Rotationswinkel der Verdrängermaschine von 70° - 360°, insbesondere von 75° - 355°, insbesondere von 80° - 350°, geöffnet ist. Die ersten Gradzahlen der angegebenen Bereiche betreffen immer den Winkel der Verdrängermaschine, der bei dem Öffnungsvorgang des ersten Durchgangs vorliegt.

Wie bereits dargestellt, beschreibt der 0°-Winkel der Verdrängermaschine den Beginn der Verdichtung zwischen der Verdrängerspirale und der Gegenspirale. Der 0°-Winkel der Verdrängermaschine beschreibt den Zustand, bei dem eine der zumindestens zwei Verdichtungskammern geschlossen ist.

Der zweite Durchgang ist vorzugsweise bei einem Rotationswinkel der Verdrängermaschine von - 410° bis 40°, insbesondere von - 365° bis - 5°, insbesondere von - 320° bis - 50°, geöffnet. Die negativen Werte der Rotationswinkel der Verdrängermaschine sind in Relation zum 0°-Winkel der Verdrängermaschine zu interpretieren. Mit anderen Worten betreffen die negativen Winkel Vorgänge bzw. Rotationsbewegungen vor dem Beginn der Verdichtung.

Mit anderen Worten sind die mindestens zwei Durchgänge, d.h. der erste Durchgang sowie der mindestens zweite Durchgang in derartigen Abschnitten der Verdrängerspirale ausgebildet, dass obengenannte Bedingungen hinsichtlich der Öffnung bzw. des Öffnungszeitpunktes sowie der Schließung bzw. des Schließungszeitpunktes erreicht werden können. In Abhängigkeit der Größe der Verdrängermaschine können somit unterschiedliche geometrische Ausbildungen hinsichtlich der Anordnung der Durchgänge konstruiert sein. Für die genannten Bedingungen hinsichtlich der Zeitpunkte der Öffnung und Schließung der Durchgänge gilt jedoch für alle zu konstruierenden Verdrängermaschinen das oben Genannte.

Vorzugsweise ist der erste Durchgang mindestens bei einem Rotationswinkel von 10°, insbesondere von mindestens 20°, insbesondere von mindestens 30°, vor Erreichen des Ausschiebewinkels (sogenannter Discharge-Angle) geschlossen. Der Ausschiebewinkel bzw. Discharge-Angle beschreibt den Rotationswinkel, bei dem das in den Verdichtungskammern verdichtete Gas in die Hochdruckkammer ausreichend ausgeschoben wurde und der Druck in der Verdichtungskammer entsprechend schlagartig abnimmt. Mit anderen Worten wird vor Erreichen des Discharge-Angles, insbesondere mindestens 10° vor Erreichen des Discharge-Angles, insbesondere mindestens 20° vor Erreichen des Discharge-Angles, insbesondere mindestens 30° vor Erreichen des Discharge-Angles, der erste Durchgang geschlossen. Das bedeutet, dass verdichtetes Gas, das in den Verdichtungskammern vorliegt, jedoch nicht in die Hochdruckkammer ausgeschoben wurde, in der Verdichtungskammer bleibt. Dieses restliche verdichtete Gas, das nicht ausgeschoben bzw. ausgestoßen wurde, darf nicht in die Gegendruckkammer bzw. nicht in den Back-Pressure-Raum gelangen. Daher ist der erste Durchgang rechtzeitig vor Erreichen des Ausschiebewinkels bzw. des Discharge-Angles, zu schließen.

Aufgrund der beschriebenen Öffnungen bzw. Öffnungszeitabschnitte des ersten Durchgangs und des zweiten Durchgangs kann ein variables Back-Pressure-System bzw. ein variables Gegendruck-System bereitgestellt werden, wobei der Druck in der Gegendruckkammer aufgrund des Abgleiches zwischen dem zu erzielenden Hochdruck und dem in der Niederdruckkammer herrschenden Niederdruck bzw. Saugdruck, äußerst vorteilhaft einstellbar ist.

Als besonders vorteilhaft stellt sich in diesem Zusammenhang die Ausbildung des zweiten Durchgangs dar, der im Anfangsbereich der Verdrängerspirale ausgebildet ist. Mit Hilfe der erfindungsgemäßen Verdrängermaschine sind demnach sowohl Informationen über den Druck in den inneren Verdichtungskammern, als auch über den Druck im Anfangsbereich der Verdrängerspirale abgreifbar.

Zwar ist der Back-Pressure bzw. Gegendruck immer höher als die entgegenwirkende Axialkraft aufgrund der in den Verdichtungskammern herrschenden verdichteten hohen Drücke, jedoch kann der Back-Pressure-Druck in unterschiedlichen Betriebsphasen geringer eingestellt werden, als dies mit herkömmlichen Verdrängermaschinen der Fall ist, so dass mit Hilfe der erfindungsgemäßen Verdrängermaschine ein effektiverer Verdichtungsprozess realisiert werden kann.

Insbesondere in der Ansaugphase des Verdichtungsprozesses treten gasdynamische Effekte auf. Es kann beispielsweise zu einem Unterdruck im Ansaugbereich kommen. Ein derartiger Unterdruck führt automatisch zu einem Zusammenpressen der Verdrängerspirale auf die Gegenspirale, so dass zu diesem Zeitpunkt des Verdichtungsprozesses in der Gegendruckkammer ein geringerer Gegendruck eingestellt werden kann. Insgesamt ergibt sich der Vorteil, dass durch das Abgreifen möglichst vieler Informationen aus den weiter innen gelegenen Verdichtungskammern sowie aus dem Anfangsbereich bzw. Ansaugbereich der Verdrängerspirale die tatsächlichen Drücke in den jeweiligen Abschnitten der Verdrängermaschine bezogen werden können, und in die Erzeugung des Back-Pressures bzw. Gegendrucks einfließen können.

Im aktivierten Zustand der Verdrängermaschine, d.h. bei einer orbitierenden Bewegung der Verdrängerspirale in der Gegenspirale, werden mehrere Verdichtungskammern gebildet, deren Raum vom äußeren radialen Umfang der Verdrängerspirale hin zur Mitte kleiner werden, so dass das am Umfang aufgenommene Kältemittelgas verdichtet wird. Der Verdichtungsenddruck wird in einem axialen Bereich der Verdrängerspirale, insbesondere in dem mittleren Abschnitt der Verdrängerspirale erreicht, und das Kältemittelgas bei erreichtem Hochdruck axial abgegeben. Hierzu weist die Gegenspirale eine Öffnung auf, so dass eine Fluidverbindung zum Hochdruckbereich, insbesondere zur Hochdruckkammer gebildet wird.

Die temporäre Fluidverbindung zwischen der Gegendruckkammer und zumindest einer der Verdichtungskammern wird durch die Anordnung der Durchgänge und die orbitierende Bewegung der Verdrängerspirale ermöglicht.

Des Weiteren ist es möglich, dass in bestimmten zeitlichen Abschnitten des Verdichtungsprozesses beide Durchgänge der Verdrängerspirale frei sind und somit Fluidverbindungen zwischen der Gegendruckkammer und mindestens zwei Verdichtungskammern hergestellt werden können. Vorzugsweise sind die Durchgänge in der Verdrängerspirale derart angeordnet, dass zum Beginn des Verdichtungsprozesses beide Durchgänge verschlossen sind, dh., dass beide Durchgänge von Spiralflankenabschnitten der Gegenspirale abgedeckt sind.

Des Weiteren ist es möglich, dass die Verdrängermaschine derart ausgebildet ist, dass vom Hochdruckbereich der Verdrängermaschine zu der Gegendruckkammer eine Gasverbindungsleitung ausgebildet ist. Beispielsweise ist die Gasverbindungsleitung von der Hochdruckkammer zur Gegendruckkammer ausgebildet. Die Gasverbindungsleitung kann in der Gegenspirale ausgebildet sein und die Hochdruckkammer mit der Gegendruckkammer verbinden. In einer weiteren Ausführungsform der Erfindung kann die Gasverbindungsleitung im Gehäuse der Verdrängermaschine ausgebildet sein.

Des Weiteren kann ausgehend vom Hochdruckbereich der Verdrängermaschine zur Niederdruckkammer ein Ölrückführungskanal ausgebildet sein. Es kann somit eine Trennung der Ölströmung von der Kältemittelgasströmung innerhalb des Verdichtungsprozesses realisiert werden. Der Ölrückführungskanal ist mit anderen Worten vorzugsweise von der Gasverbindungsleitung separiert.

Der zweite Durchgang der Verdrängerspirale, der eine temporäre Fluidverbindung vom Anfangsbereich der Verdrängerspirale zur Gegendruckkammer herstellt, stellt jedoch keine Verbindung zum Saugbereich bzw. Niederdruckbereich, insbesondere zur Niederdruckkammer, der Verdrängermaschine her. Der Massenstrom des Kühlmittels wird im Bereich des zweiten Durchgangs, d.h. im Anfangsbereich der Spirale angesaugt und nur in Richtung des Verdichtungsprozesses zwischen den beiden Spiralen, d.h. zwischen der Verdrängerspirale und der Gegenspirale gefördert bzw. transportiert. Der Massenstrom kann nicht von der Gegendruckkammer in den Niederdruckbereich, insbesondere in die Niederdruckkammer, gelangen. Aufgrund dessen kann ein variables Back-Pressure-System bzw. ein variables Gegendruck-System zur Verfügung gestellt werden, wobei sich der Druck der Gegendruckkammer durch einen Abgleich zwischen dem Hochdruck und dem Niederdruck bzw. Saugdruck einstellt.

In einer weiteren Ausführungsform der Erfindung kann in dem mindestens zweiten Durchgang eine Düse ausgebildet sein.

Die erfindungsgemäße Verdrängermaschine kann als elektrisch und/oder elektromotorisch angetriebene Verdrängermaschine, oder als Verdrängermaschine mit mechanischem Antrieb ausgebildet sein.

Ein nebengeordneter Aspekt der Erfindung betrifft eine Verdrängerspirale für eine Verdrängermaschine nach dem Spiralprinzip, insbesondere eine Verdrängerspirale für eine erfindungsgemäße Verdrängermaschine.

Die Verdrängerspirale weist erfindungsgemäß mindestens zwei Durchgänge auf, wobei ein erster Durchgang im Wesentlichen in einem mittleren Abschnitt der Verdrängerspirale ausgebildet ist, und mindestens ein zweiter Durchgang im Anfangsbereich der Verdrängerspirale ausgebildet ist.

Hinsichtlich der Ausbildung der erfindungsgemäßen Verdrängerspirale wird auf vorherige Erläuterungen verwiesen, insbesondere auf die Erläuterungen im Zusammenhang mit dem ersten Durchgang und/oder dem mindestens zweiten Durchgang und der relativen Anordnung der Durchgänge zueinander bzw. in Relation zu vorherrschenden Volumina in mindestens einer der Verdichtungskammern bzw. in verschiedenen Verdichtungskammern. Es ergeben sich ähnliche Vorteile, wie diese bereits im Zusammenhang mit der erfindungsgemäßen Verdrängermaschine angegeben sind.

Ein weiterer Aspekt der Erfindung betrifft ein Verfahren zum Betreiben einer erfindungsgemäßen Verdrängermaschine. Das Verfahren beruht darauf, dass der erste Durchgang bei Erreichen von 95 % - 85 %, insbesondere bei Erreichen von 92 % - 88 %, insbesondere bei Erreichen von 90 %, des relativen Verdichtungskammervolumens geöffnet wird, und während einer nach Öffnung anschließenden Rotation der Verdrängerspirale um einen Rotationswinkel von 180° - 360°, insbesondere von 255° - 315°, insbesondere von 270°, geöffnet bleibt.

Des Weiteren ist es möglich, dass der zweite Durchgang bei Erreichen des 1,02-fachen bis 1,03-fachen des relativen Verdichtungskammervolumens, insbesondere bei Erreichen des maximalen relativen Verdichtungskammervolumens, geschlossen wird, und während einer der Schließung vorangegangenen Rotation der Verdrängerspirale um einen Rotationswinkel von 180° - 360°, insbesondere von 255° - 315°, insbesondere von 270°, geöffnet ist.

Hinsichtlich weiterer Ausbildungen des erfindungsgemäßen Verfahrens wird auf vorherige Erläuterungen verwiesen, insbesondere auf die Erläuterungen in Zusammenhang mit den Öffnungs- und/oder Schließungszeitpunkten bzw. der Öffnungsdauern der Durchgänge. Es ergeben sich ähnliche Vorteile, wie diese bereits im Zusammenhang mit der erfindungsgemäßen Verdrängermaschine angegeben sind.

Ein weiterer nebengeordneter Aspekt der Erfindung betrifft eine Fahrzeugklimaanlage mit einer erfindungsgemäßen Verdrängermaschine, insbesondere mit einem erfindungsgemäßen Scrollverdichter. Es ergeben sich ähnliche Vorteile, wie diese bereits im Zusammenhang mit der erfindungsgemäßen Verdrängermaschine und/oder der erfindungsgemäßen Verdrängerspirale für eine Verdrängermaschine angegeben sind.

Ein weiterer nebengeordneter Aspekt der Erfindung betrifft ein Fahrzeug, insbesondere ein Hybridfahrzeug, mit einer erfindungsgemäßen Verdrängermaschine und/oder mit einer erfindungsgemäßen Fahrzeugklimaanlage. Es ergeben sich ähnliche Vorteile, wie diese bereits im Zusammenhang mit der erfindungsgemäßen Verdrängermaschine und/oder mit der erfindungsgemäßen Verdrängerspirale für eine Verdrängermaschine angegeben sind. Insbesondere handelt es sich bei dem erfindungsgemäßen Fahrzeug um ein elektrisches Hybridfahrzeug.

Die Erfindung wird im Folgenden anhand von Ausführungsbeispielen unter Bezugnahme auf die beigefügten, schematischen Zeichnungen näher erläutert.

Darin zeigen
- Fig. 1: eine erfindungsgemäße Verdrängerspirale in einer perspektivischen Draufsicht;
- Fig. 2: einen Längsschnitt einer erfindungsgemäßen Verdrängermaschine, insbesondere eines Scrollverdichters;
- Fig. 3a + 3b: verschiedene Positionierungen und Verfahrenszustände einer erfindungsgemäßen Verdrängermaschine mit einer Draufsicht auf die Verdrängerspirale, die orbitierende Bewegungen in der Gegenspirale durchführt, wobei der Boden der Gegenspirale nicht dargestellt ist;
- Fig. 4: eine schematische Darstellung des Arbeitsprinzips der erfindungsgemäßen Verdrängermaschine;
- Fig. 5: eine Darstellung der Öffnungszeiträume der Durchgänge in Abhängigkeit des Rotationswinkel;
- Fig. 6: eine Darstellung des Drucks in der Verdichtungskammer in Abhängigkeit des Rotationswinkels sowie des gewählten Saugdrucks in Zusammenhang mit dem verwendeten Kältemittel R134a;
- Fig. 7: Darstellung von Ausstoßzyklen aus der Verdichtungskammer in die Hochdruckkammer und Darstellung der Öffnungsphasen des ersten Durchgangs in Zusammenhang mit dem Kältemittel R134a;
- Fig. 8: Darstellung der Schließkraft in Relation zum Saugdruck und zu erzielendem Enddruck;
- Fig. 9: Darstellung des Druckverhaltens während der Ansaugphase; und
- Fig. 10: Verlauf des Back-Pressures unter zusätzlicher Anzeige des Verdichtungsdrucks bei dem Kältemittel R134a.

Im Folgenden werden für gleiche und gleichwirkende Teile dieselben Bezugsziffern verwendet.

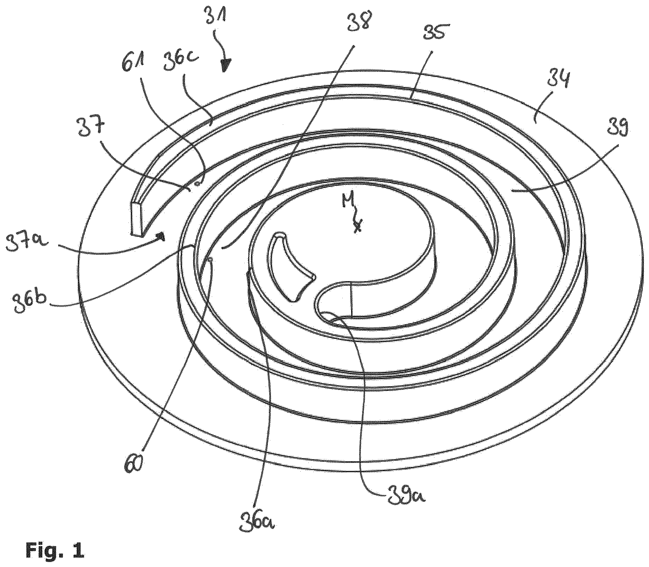

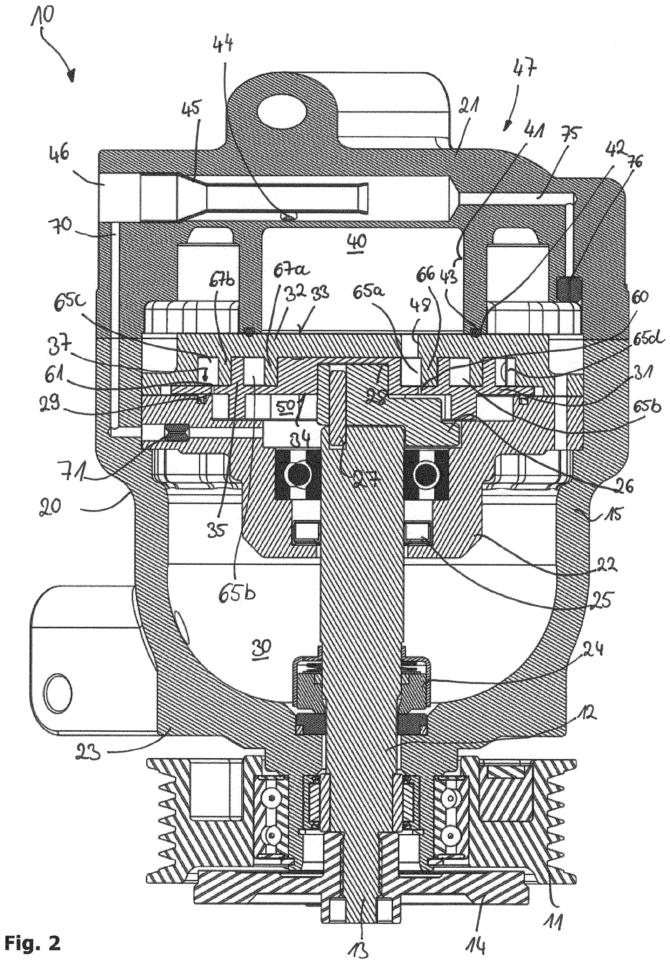

In Fig. 1 ist eine erfindungsgemäße Verdrängerspirale 31 dargestellt. Diese dient insbesondere zum Einbau in eine erfindungsgemäße Verdrängermaschine, insbesondere in einen Scrollverdichter 10, gemäß Ausführungsbeispiel der Fig. 2.

Wie in Fig. 1 dargestellt, umfasst die Verdrängerspirale 31 einen Boden 34. Der Boden 34 kann auch als Rückwand der Verdrängerspirale 31 bezeichnet werden. Der Boden 34 ist kreisrund ausgebildet und hat die Form einer runden Platte. Auf dem Boden 34 ist eine Spirale 35 mit Spiralflankenabschnitten 36a, 36b und 36c ausgebildet.

Das Spiralelement 35 erstreckt sich ausgehend vom Mittelpunkt M bis zu einem Anfangsbereich 37.

Im Boden 34 sind zwei Durchgänge, nämlich ein erster Durchgang 60 sowie ein zweiter Durchgang 61, ausgebildet. Bei den Durchgängen 60 und 61 handelt es sich um Durchgangsbohrungen, die zur Oberfläche des Bodens 34 im Wesentlichen senkrecht verlaufen. Der erste Durchgang 60 ist dabei in einem mittleren Abschnitt 38 der Verdrängerspirale 31 ausgebildet. Der zweite Durchgang 61 ist hingegen im Anfangsbereich 37 der Verdrängerspirale 31 ausgebildet.

Der erste Durchgang 60 ist in einem Abschnitt des Bodens 34 ausgebildet, wobei der erste Durchgang 60 außermittig zwischen den Spiralflankenabschnitten 36a und 36b ausgebildet ist. Der zweite Durchgang 61 ist hingegen außermittig zwischen den Spiralflankenabschnitten 36b und 36c ausgebildet. Als Anfangsbereich 37 ist der Abschnitt des zwischen den Spiralflankenabschnitten 36c und 36b ausgebildeten Ganges 39 zu verstehen, der sich ausgehend von der Öffnung 37a in etwa über einen Bereich von maximal 10 % der Gesamtlänge des Spiralganges 39 entspricht. Die Gesamtlänge des Spiralganges 39 ist ausgehend von der Öffnung 37a bis zum Endabschnitt 39a des Spiralganges 39 definiert. Der Endabschnitt 39a ist der in Strömungsrichtung des Kältemittels letzte Abschnitt des Spiralganges 39. Im dargestellten Beispiel ist der Endabschnitt 39a gebogen ausgebildet.

Die gemäß Fig. 1 dargestellte Verdrängerspirale 31 ist in einem Scrollverdichter 10 gemäß Ausführungsbeispiel der Fig. 2 eingebaut. Dieser Scrollverdichter 10 kann beispielsweise als Verdichter einer Fahrzeugklimaanlage wirken. Eine Fahrzeugklimaanlage, wie z.B. eine CO₂-Fahrzeugklimaanlage, weist typischerweise einen Gaskühler, einen inneren Wärmetauscher, eine Drossel, einen Verdampfer und einen Verdichter auf. Der Verdichter kann demnach der abgebildete Scrollverdichter 10 sein. Bei dem Scrollverdichter 10 handelt es sich mit anderen Worten um eine Verdrängermaschine nach dem Spiralprinzip.

Der dargestellte Scrollverdichter 10 weist einen mechanischen Antrieb 11 in Form einer Riemenscheibe auf. Die Riemenscheibe 11 ist im Gebrauch mit einem Elektromotor oder einem Verbrennungsmotor verbunden. Alternativ ist es möglich, dass der Scrollverdichter elektrisch oder elektromotorisch angetrieben wird.

Der Scrollverdichter 10 umfasst außerdem ein Gehäuse 20 mit einem oberen Gehäuseteil 21, das den Hochdruckbereich 47 des Scrollverdichters 10 verschließt. Im Gehäuse 20 ist eine Gehäusezwischenwand 22 ausgebildet, die eine Niederdruckkammer 30 begrenzt. Die Niederdruckkammer 30 kann auch als Saugraum bezeichnet werden. Im Gehäuseboden 23 ist eine Durchtrittsöffnung ausgebildet, durch die sich eine Antriebswelle 12 erstreckt. Das außerhalb des Gehäuses 20 angeordnete Wellenende 13 ist drehfest mit dem Mitnehmer 14 verbunden, der in die am Gehäuse 20 drehbar gelagerte Riemenscheibe, d.h. in den mechanischen Antrieb 11 eingreift, so dass von der Riemenscheibe ein Drehmoment auf die Antriebswelle 12 übertragen werden kann.

Die Antriebswelle 12 ist einerseits im Gehäuseboden 23 und andererseits in der Gehäusezwischenwand 22 drehbar gelagert. Die Abdichtung der Antriebswelle 12 gegen den Gehäuseboden 23 erfolgt durch eine erste Wellendichtung 24 und gegen die Gehäusezwischenwand 22 durch eine zweite Wellendichtung 25.

Der Scrollverdichter 10 umfasst des Weiteren die Verdrängerspirale 31 und eine Gegenspirale 32. Die Verdrängerspirale 31 und die Gegenspirale 32 greifen ineinander ein. Die Gegenspirale 32 steht vorzugsweise sowohl in Umfangsrichtung als auch in radialer Richtung fest. Die mit der Antriebswelle 12 gekoppelte bewegliche Verdrängerspirale 31 beschreibt eine kreisförmige Bahn, so dass in an sich bekannter Weise durch diese Bewegung mehrere Gastaschen oder Verdichtungskammern 65a, 65b, 65c und 65d erzeugt werden, die zwischen der Verdrängerspirale 31 und der Gegenspirale 32 radial nach innen wandern.

Durch diese orbitierende Bewegung wird Arbeitsmedium, insbesondere ein Kältemittel, angesaugt und mit der weiteren Spiralbewegung und der damit einhergehenden Verkleinerung der Verdichtungskammer 65a, 65b, 65c und 65d verdichtet. Das Arbeitsmedium, insbesondere das Kältemittel, wird von radial außen nach radial innen, beispielsweise linear zunehmend verdichtet, und im Zentrum der Gegenspirale 32 in die Hochdruckkammer 40 ausgestoßen.

Um eine orbitierende Bewegung der Verdrängerspirale 31 zu erzeugen, ist ein Exzenterlager 26 ausgebildet, das mit der Antriebswelle 12 durch einen

Exzenterstift 27 verbunden ist. Das Exzenterlager 26 und die Verdrängerspirale 31 sind exzentrisch bezogen auf die Gegenspirale 32 angeordnet. Die Verdichtungskammern 65a, 65b und 65c sind durch Anlage der Verdrängerspirale 31 and die Gegenspirale 32 voneinander druckdicht getrennt.

Der Gegenspirale 32 ist in Strömungsrichtung die Hochdruckkammer 40 nachgeordnet und steht mit der Gegenspirale 32 in Fluidverbindung durch einen Auslass 48. Der Auslass 48 ist vorzugsweise nicht exakt im Mittelpunkt der Gegenspirale 32 angeordnet, sondern befindet sich außermittig im Bereich einer innersten Verdichtungskammer 65a, die zwischen der Verdrängerspirale 31 und der Gegenspirale 32 gebildet ist. Dadurch wird erreicht, dass der Auslass 48 von der Lagerbuchse 28 des Exzenterlagers 26 nicht abgedeckt wird und das endverdichtete Arbeitsmedium in die Hochdruckkammer 40 ausgestoßen werden kann.

Der Boden 33 der Gegenspirale 32 bildet abschnittsweise den Boden der Hochdruckkammer 40. Der Boden 33 ist breiter als die Hochdruckkammer 40. Die Hochdruckkammer 40 wird seitlich von der Seitenwand 41 begrenzt. In einem zu dem Boden 33 der Gegenspirale 32 weisenden Ende der Seitenwand 41 ist eine Ausnehmung 42 ausgebildet, in der ein Dichtring 43 angeordnet ist. Die Seitenwand 41 ist eine Umfangswand, die einen Anschlag der Gegenspirale 32 bildet. Die Hochdruckkammer 40 ist im oberen Gehäuseteil 21 ausgebildet. Diese weist einen rotationssymmetrischen Querschnitt auf.

Das in der Hochdruckkammer 40 gesammelte verdichtete Arbeitsmedium, nämlich das Kältegas, strömt durch einen Auslass 44 aus der Hochdruckkammer 40 in einen Ölabscheider 45, der vorliegend als Zyklon-Abscheider ausgebildet ist. Das verdichtete Arbeitsmedium, nämlich das verdichtete Kältegas, strömt durch den Ölabscheider 45 und die Öffnung 46 in den Kreislauf der beispielhaften Klimaanlage.

Die Steuerung des Anpressdrucks der Verdrängerspirale 31 auf die Gegenspirale 32 wird dadurch verwirklicht, dass ein Boden 34 der Verdrängerspirale 31 mit einem entsprechenden Druck beaufschlagt wird. Dazu ist eine Gegendruckkammer 50, die auch als Back-Pressure-Raum bezeichnet werden kann, ausgebildet. In der Gegendruckkammer 50 ist das Exzenterlager 26 befindlich. Die Gegendruckkammer 50 wird durch den Boden 34 der Verdrängerspirale 31 und durch die Gehäusezwischenwand 22 begrenzt.

Die Gegendruckkammer 50 ist durch die bereits beschriebene zweite Wellendichtung 25 von der Niederdruckkammer 30 fluiddicht getrennt. Ein Dicht-und Gleitring 29 sitzt in einer Ringnut in der Gehäusezwischenwand 22. Die Verdrängerspirale 31 stützt sich deshalb in axialer Richtung auf dem Dicht- und Gleitring 29 ab und gleitet auf diesem.

Wie in Fig. 2 ebenfalls zu erkennen ist, können die Durchgänge 60 und 61 der Verdrängerspirale 31 zumindest temporär eine Fluidverbindung zwischen der Gegendruckkammer 50 und den dargestellten Verdichtungskammern 65a und 65c herstellen. In dem Querschnitt ist anschaulich zu erkennen, dass der erste Durchgang 60 im Wesentlichen in einem mittleren Abschnitt 38, und der zweite Durchgang im Anfangsbereich 37 der Verdrängerspirale 31 ausgebildet ist.

Das Spiralelement 66 der Gegenspirale 32, insbesondere die Spiralflankenabschnitte 67a und 67b können die Durchgänge 60 und 61 temporär verschließen. Mit anderen Worten werden die Durchgänge 60 und 61 beispielsweise zeitgleich und/oder zeitlich versetzt, durch entsprechende Verschiebung in Relation zu den Spiralflankenabschnitten 67a und 67b freigegeben, so dass ein Arbeitsmedium von den Verdichtungskammern 65a und/oder 65b und/oder 65c und/oder 65d in Richtung der Gegendruckkammer 50 strömen kann.

Wie in Fig. 2 des Weiteren dargestellt ist, ist vom Hochdruckbereich 47 der Verdrängermaschine bzw. des Scrollverdichters 10 zur Gegendruckkammer 50 eine Gasverbindungsleitung 70 ausgebildet. Diese Gasverbindungsleitung 70 ist nach dem Ölabscheider 45 ausgebildet, so dass durch die Gasverbindungsleitung 70 tatsächlich nur Gas, und kein Öl transportiert wird. In der Gasverbindungsleitung 70 ist eine Drossel 71 ausgebildet.

In einer alternativen (nicht dargestellten) Ausbildung der Erfindung kann eine Gasverbindungsleitung in der Gegenspirale 32 ausgebildet sein. Eine derartige Gasverbindungsleitung kann eine Verbindung von der Hochdruckkammer 40 zur Gegendruckkammer 50 herstellen.

Es ist zu erwähnen, dass der zweite Durchgang 61 keine Verbindung in die Niederdruckkammer 30 herstellt, da der Massenstrom eines Kühlmittels in diesem Bereich angesaugt wird und nur in Richtung des Verdichtungsprozesses, d.h. in Richtung der Verdichtungskammern 65a, 65b, 65c und 65d zwischen den beiden Spiralen 31 und 32 transportiert wird. Der Massenstrom kann nicht von der Gegendruckkammer 50 in die Niederdruckkammer 30 gelangen.

Wie in Fig. 2 weiterhin angedeutet wird, ist vom Hochdruckbereich 47 ausgehend ein Ölrückführungskanal 75 mit einer Drossel 76 ausgebildet. Ein derartiger Ölrückführungskanal 75 stellt eine Verbindung vom Hochdruckbereich 47 zur Niederdruckkammer 30 her, um die Ölrückführung zu gewährleisten. Es kann somit eine getrennte Ölrückführung und eine getrennte Gasrückführung realisiert werden.

Mit Hilfe des erfindungsgemäßen Scrollverdichters bzw. mit Hilfe der Verwendung einer erfindungsgemäßen Verdrängerspirale 31 kann ein variables Back-Pressure-System, d.h. ein variables Gegendruckkammer-System konstruiert werden, wobei sich der Druck in der Gegendruckkammer 50 durch einen Abgleich zwischen dem im Hochdruckbereich 47 herrschenden Hochdruck und dem in der Niederdruckkammer 30 herrschenden Saugdruck bzw. Niederdruck einstellt.

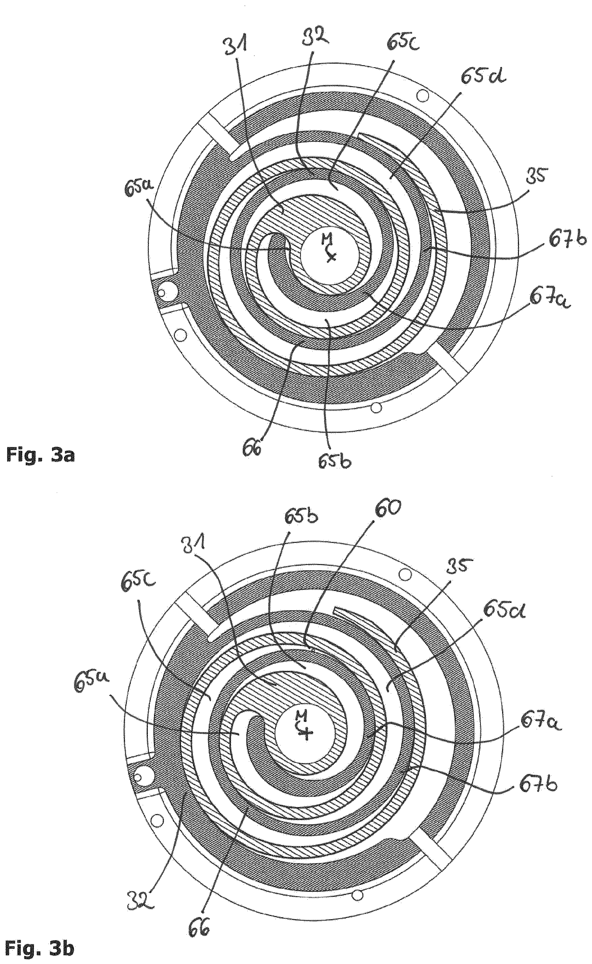

Dies wird u.a. aufgrund der Anordnung der Durchgänge 60 und 61 begründet. Es ergeben sich, je nach Zeitpunkt des Verdichtungsprozesses, verschiedene Positionen der Spiralen 31 und 32 zueinander, so dass, wie dies in den Fig. 3a - 3b dargestellt ist, einer oder keiner der beiden Durchgänge 60 und 61 frei ist, und eine Fluidverbindung von der jeweiligen Verdichtungskammer zur Gegendruckkammer 50 herstellbar ist.

In den Fig. 3a und 3b ist eine Ansicht auf die Verdrängerspirale 31 von oben dargestellt, wobei das Spiralelement 66 bzw. die Spiralflankenabschnitte 67a, 67b der Gegenspirale 32 zu erkennen sind. Der Boden 33 der Gegenspirale 32 ist hingegen nicht zu erkennen.

In Fig. 3a sind beide Durchgänge 60 und 61 verschlossen, d.h. das Spiralelement 66 der Gegenspirale 32 bzw. die Spiralflankenabschnitte 67a und 67b decken die Durchgänge 60 und 61 ab. In Fig. 3a wird mit anderen Worten die 0°-Position des Verdichtungsprozesses dargestellt. Dabei wurde das Kältemittel bereits angesaugt und die entsprechenden Verdichtungskammern 65a - 65e gebildet. Bei der Verdichtungskammer 65e handelt es sich um die in Strömungsrichtung zuerst geschlossene Verdichtungskammer.

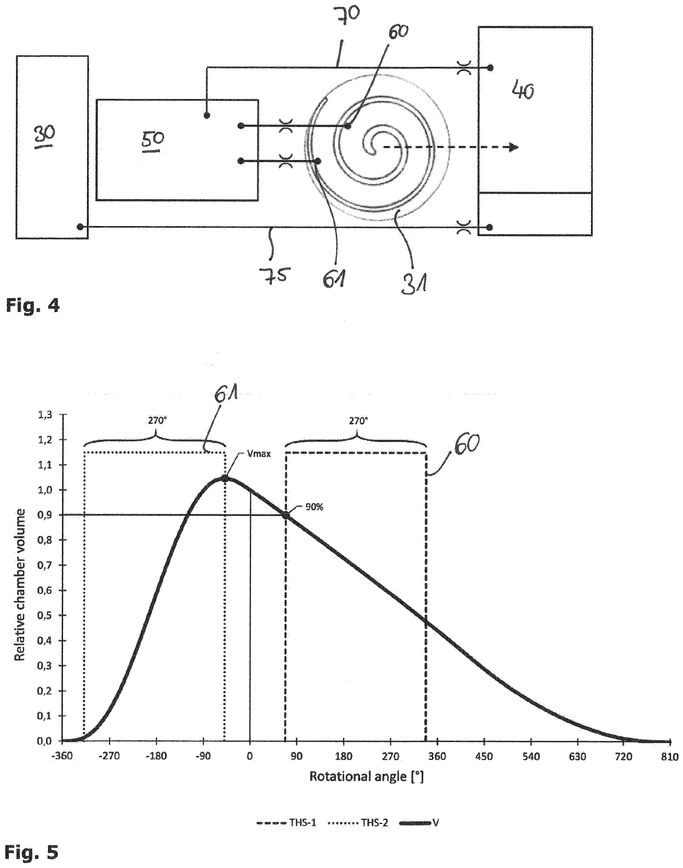

In Fig. 3b wird hingegen eine 80°-Position dargestellt. In dieser Position wird der erste Durchgang 60 gerade geöffnet. Dies entspricht einem 90 %-Punkt des relativen Volumens, wie dieses in Fig. 5 detailliert erläutert wird.

In Fig. 3a ist keine Fluidverbindung von den Verdichtungskammern 65a - 65e zur Gegendruckkammer 50 möglich. In Fig. 3b kann hingegen aufgrund der Öffnung des ersten Durchgangs 60 eine Fluidverbindung zwischen der Verdichtungskammer 65c zur Gegendruckkammer 50 hergestellt werden.

In Fig. 4 ist schematisch das Grundprinzip der erfindungsgemäßen Verdrängermaschine dargestellt. Zu erkennen sind die Niederdruckkammer bzw. Saugkammer 30, die Hochdruckkammer 40 sowie die Gegendruckkammer sowie der Back-Pressure-Raum 50. Zwischen der Hochdruckkammer 40 und der Niederdruckkammer 30 ist ein Ölrückführungskanal 75 ausgebildet. Die Ölrückführung erfolgt demnach ausschließlich zwischen der Hochdruckkammer 40 und der Niederdruckkammer 30. Davon getrennt ist die Gasverbindungsleitung 70 zwischen der Hochdruckkammer 40 und der Gegendruckkammer 50 ausgebildet. Ebenfalls zu erkennen sind der erste Durchgang 60 sowie der zweite Durchgang 61 in der Verdrängerspirale 31. Aufgrund der ausgebildeten Durchgänge 60 und 61 sind Verbindungen von den Verdichtungskammern 65a - 65e zur Gegendruckkammer 50 möglich.

In Fig. 5 ist eine Volumenänderungskurve eines Scrollverdichters dargestellt. Diese Volumenänderungskurve ist prinzipiell für alle Scrollverdichter in etwa gleich und unabhängig von dem verwendeten Kältemittel. Der Rotationswinkel (rotational angle) 0° zeigt dabei den Beginn des Verdichtungsprozesses in einem Scrollverdichter. Ebenfalls zu erkennen sind die Graphen THS-1 und THS-2. THS-1 stellt dabei dar, zu welchen Zeitpunkten des Verdichtungsprozesses abhängig vom relativen Volumen in der Verdichtungskammer der erste Durchgang 60 geöffnet ist. Es ist zu erkennen, dass der erste Durchgang 60 in einem derartigen Abschnitt, insbesondere in einem derartigen mittleren Abschnitt 38 der Verdrängerspirale 31 ausgebildet ist, in dem der erste Durchgang 60 im aktivierten Zustand der Verdrängermaschine bei Erreichen von 90 % des relativen Verdichtungskammervolumens geöffnet ist und anschließend nach dem Öffnen während einer darauffolgenden Rotation der Verdrängerspirale 31 um einen Rotationswinkel von 270° geöffnet bleibt. Der erste Durchgang 60 wird im vorliegenden Fall bei einem Rotationswinkel von 80° geöffnet. Die Schließung des ersten Durchgangs erfolgt hingegen bei einem Rotationswinkel von 350°.

Des Weiteren ist in Fig. 5 der Schließungszeitpunkt des zweiten Durchgangs 61 (THS-2) dargestellt. Demnach ist der zweite Durchgang 61, der im Anfangsbereich 37 der Verdrängerspirale 31 ausgebildet ist, zum Zeitpunkt zu schließen, in dem das maximale relative Verdichtungskammervolumen (Vmax) vorliegt. Die Schließung erfolgt demnach bei einem Rotationswinkel von - 50°, wobei der negative Rotationswinkel in Relation zum 0°-Winkel des Scrollverdichters 10 zu interpretieren ist, bei dem der Verdichtungsprozess beginnt. Demnach ist der zweite Durchgang 61 vor der Schließung für ca. 270° geöffnet.

Mit anderen Worten ist der zweite Durchgang 61 in einem derartigen Abschnitt der Verdrängerspirale 31 ausgebildet, in dem der zweite Durchgang 61 bei Erreichen des maximalen relativen Verdichtungskammervolumens geschlossen wird und während einer der Schließung vorangegangenen Rotation der Verdrängerspirale 31 um einen Rotationswinkel von 270° geöffnet ist. Wie in Fig. 5 dargestellt wird, ist der zweite Durchgang 61 bei einem Rotationswinkel von - 320° bis - 50° geöffnet.

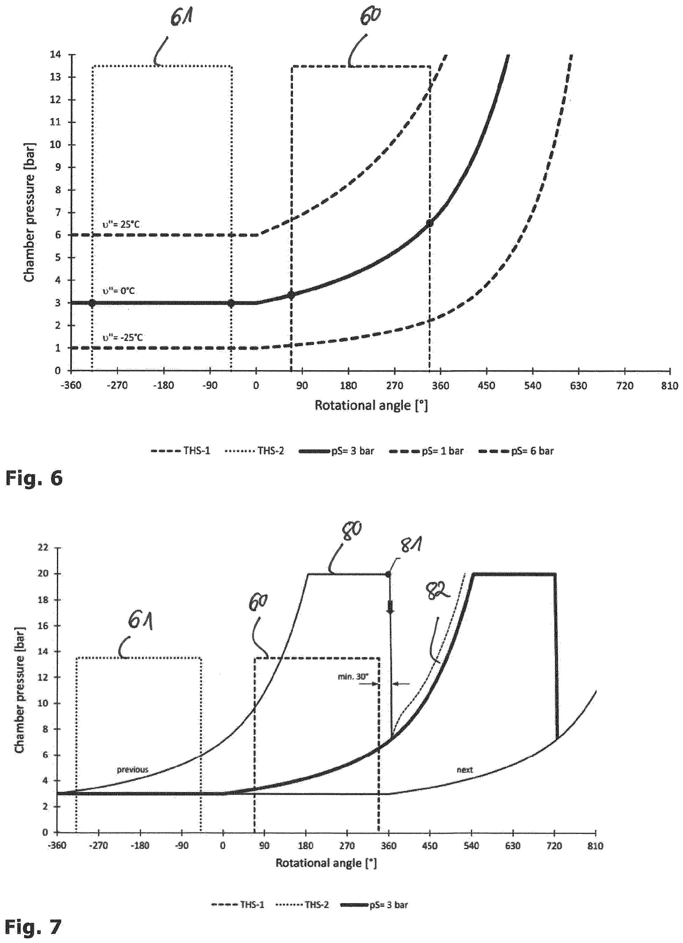

In Fig. 6 sind ebenfalls die Öffnungszeiträume der Durchgänge 60 und 61 dargestellt. Die Darstellung entspricht einem Scrollverdichter 10, wobei R134a als Kältemittel verwendet wird. Die dargestellten Graphen sind kältemittelabhängig. Die Graphen sind des Weiteren für unterschiedliche Saugdrücke (pS) von 3 bar, 1 bar und 6 bar dargestellt. Zu erkennen ist das Verhalten des Druckes in der Verdichtungskammer (chamber pressure) in Abhängigkeit des Rotationswinkels (rotational angle) dargestellt. Bei einem Saugdruck bzw. Niederdruck von 1 bar verläuft die Verdichtungskurve relativ flach, wohingegen die Verdichtungskurve bei einem Saugdruck von 6 bar relativ steil verläuft. Die Saugdrücke 3 bar, 1 bar und 6 bar stehen für die jeweiligen Sättigungstemperaturen/Verdampfungstemperaturen υ" - 25°C, 0°C und 25°C. Ein standardmäßiger Scrollverdichter muss in Fahrzeugklimaanlagen in Temperaturbereich von - 25°C bis + 25°C entsprechende Temperaturen bereitstellen, so dass der Saugdruck (pS) in einem Bereich von 1 bar - 6 bar variiert.

In Fig. 7 werden wiederum Graphen abgebildet, welche Drücke in der Verdichtungskammer (chamber pressure) in Abhängigkeit des Rotationswinkels (rotational angle) darstellen. Mit einer dicken durchgezogenen Linie wird dabei der aktuelle Verdichtungszyklus dargestellt. Mit dünneren Linien werden der vorherige (previous) Zyklus sowie der darauffolgende (next) Zyklus angedeutet. In Bezug auf den aktuellen Verdichtungszyklus ist außerdem die Öffnungsdauer des ersten Durchgangs 60 (THS-1) sowie des zweiten Durchgangs 61 (THS-2) dargestellt.

Es ist zu erkennen, dass ein Verdichtungsdruck von 20 bar erzielt wird, wobei der abgeflachte obere Teil des Graphen die Ausstoßgrenze 80 beschreibt. An dieser Grenze 80 wird das verdichtete Gas in die Hochdruckkammer 40 ausgestoßen. Der Ausstoß erfolgt in einem Rotationswinkel von ca. 180° bis 360°. Der Graph deutet des Weiteren den sogenannten Ausschiebewinkel (Discharge-Angle) 81 an. Dieser Discharge-Angle 81 betrifft den Zeitpunkt, zu dem das letzte verdichtete Gas in die Hochdruckkammer ausgestoßen wurde und anschließend schlagartig der Druck in der Verdichtungskammer abnimmt. Das in der Verdichtungskammer verdichtete Gas wird nicht vollständig ausgestoßen. Es verbleibt ein restliches Gas in der Verdichtungskammer. Dieses darf jedoch nicht in die Gegendruckkammer 50 ausgestoßen werden, so dass die erste Öffnung 60 vor Erreichen des Discharge-Angles 81 geschlossen werden muss. Gemäß Fig. 7 ist der erste Durchgang 60 mindestens 30° vor Erreichen des Discharge-Angles 81 zu schließen. Die Fläche 82, die zwischen dem Graphen des aktuellen Verdichtungszyklus und einer darüber befindlichen gestrichelten Linie gebildet ist, stellt das restliche Gas des vorherigen Verdichtungszyklus dar, das nicht in die Hochdruckkammer ausgestoßen wurde.

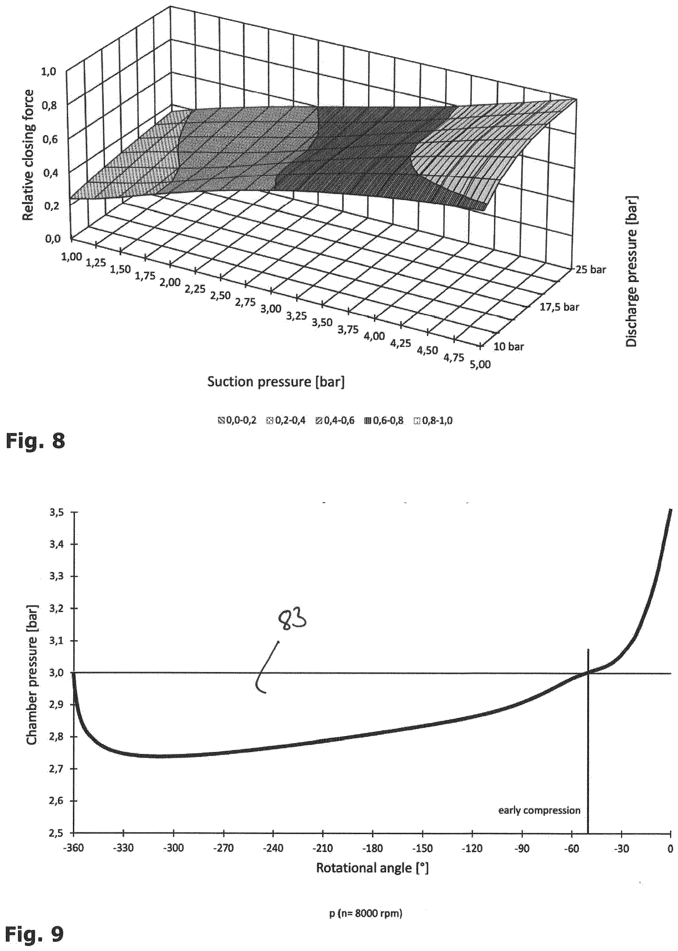

In Fig. 8 wird eine Fläche dargestellt, die die relative Schließkraft (relative closing force) betreffend die Verdrängerspirale 31 sowie die Gegenspirale 32 darstellt. Diese ist in Abhängigkeit des Saugdruckes (suction pressure) und des zu erzielenden Enddruckes (discharge pressure) dargestellt. Es wird klar, dass mit steigendem Enddruck auch die Schließkraft erhöht sein muss. Die Darstellung der Fig. 8 betrifft wiederum einen Scrollverdichter, der mit dem Arbeitsmittel R134a betrieben wird. Tatsächlich werden zur Sicherheit höhere Schließkräfte erzeugt, als dies in der Fig. 8 dargestellt ist.

In Fig. 9 sind hingegen die dynamischen Effekte in der Ansaugphase eines Verdichtungsprozesses dargestellt. Auch diese Darstellung betrifft wiederum eine Verdichtung mit dem Kältemittel R134a. In der Ansaugphase bzw. im Ansaugbereich der Verdrängerspirale kann demnach ein Unterdruck auftreten. Bei einem Unterdruck muss in der Gegendruckkammer demnach kein erhöhter Druck vorliegen, da bereits der Unterdruck die beiden Spiralen 31 und 32 aneinander drückt. Die Fläche 83, die zwischen der Horizontalen, die durch den Schnittpunkt 3,0 bar verläuft, und dem Graphen, der den Druck in der Verdichtungskammer in der Ansaugphase beschreibt, wird durch entsprechendes Öffnen des zweiten Durchgangs 62 während des Rotationswinkels (rotational angle) von minus 360° - 50° erfasst.

Insgesamt gilt, dass sich aufgrund der erfindungsgemäßen Verdrängermaschine bzw. aufgrund des erfindungsgemäßen Scrollverdichters ein technischer Vorteil dahingehend ergibt, dass durch das Detektieren mehrerer Drücke in verschiedenen Phasen der Verdichtung und in verschiedenen Abschnitte der Verdichtungskammern, der Druck in der Gegenkammer optimaler, insbesondere geringer, einstellbar ist.

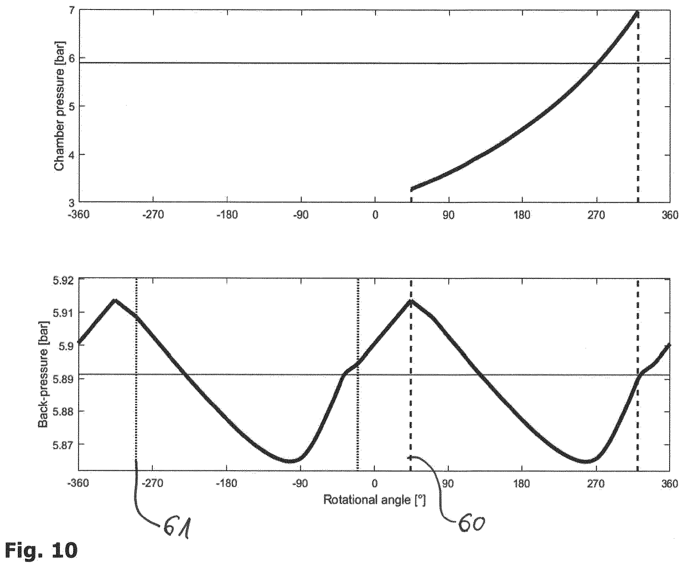

In Fig. 10 sind in Abhängigkeit des Rotationswinkels (rotational angle) zum einen der Verlauf des Gegenkammerdrucks (back-pressure) und zum anderen der Verlauf des Verdichtungskammerdrucks (chamber pressure) dargestellt. In der unteren Darstellung sind außerdem die Öffnungsabschnitte des ersten Durchgangs 60 sowie des zweiten Durchgangs 61 dargestellt. Auch diese Graphen sind im Zusammenhang mit dem Kältemittel R134a erstellt worden. Es ist sehr anschaulich dargestellt, dass mit steigendem Druck in der Verdichtungskammer (chamber pressure) der Druck in der Gegendruckkammer entsprechend abnimmt, so dass diesbezüglich entsprechend gegengesteuert werden muss.

### Bezugszeichenliste

- 10: Scrollverdichter
- 11: Mechanischer Antrieb
- 12: Antriebswelle
- 13: Wellenende
- 14: Mitnehmer
- 15: Umfangswandung
- 20: Gehäuse
- 21: Oberes Gehäuseteil
- 22: Gehäusezwischenwand
- 23: Gehäuseboden
- 24: Erste Wellendichtung
- 25: Zweite Wellendichtung
- 26: Exzenterlager
- 27: Exzenterstift
- 28: Lagerbuchse
- 29: Gleitring
- 30: Niederdruckkammer
- 31: Verdrängerspirale
- 32: Gegenspirale
- 33: Boden Gegenspirale
- 34: Boden Verdrängerspirale
- 35: Spiralelement
- 36a, 36b, 36c: Spiralflankenabschnitt
- 37: Anfangsbereich
- 37a: Öffnung
- 38: Mittlerer Abschnitt
- 39: Spiralgang
- 39a: Endabschnitt
- 40: Hochdruckkammer
- 41: Seitenwand
- 42: Ausnehmung
- 43: Dichtring
- 44: Auslass
- 45: Ölabscheider
- 46: Öffnung
- 47: Hochdruckbereich
- 48: Auslass
- 50: Gegendruckkammer
- 60: Erster Durchgang
- 61: Zweiter Durchgang
- 65a, 65b, 65c, 65d, 65e: Verdichtungskammer
- 66: Spiralelement
- 67a, 67b: Spiralflankenabschnitt
- 70: Gasverbindungsleitung
- 71: Drossel
- 75: Ölrückführungskanal
- 76: Drossel
- 80: Ausstoßgrenze
- 81: Ausschiebewinkel (Discharge-Angle)
- 82: Fläche
- 83: Fläche
- M: Mittelpunkt Verdrängerspirale

## Patentansprüche

1. Verdrängermaschine nach dem Spiralprinzip, insbesondere Scrollverdichter (10), mit einem Hochdruckbereich (47), der eine Hochdruckkammer (40) umfasst, einer Niederdruckkammer (30) und einer orbitierenden Verdrängerspirale (31), die in eine Gegenspirale (32) derart eingreift, dass zwischen der Verdrängerspirale (31) und der Gegenspirale (32) Verdichtungskammern (65a, 65b, 65c, 65d, 65e) gebildet werden, um ein Arbeitsmedium aufzunehmen, wobei zwischen der Niederdruckkammer (30) und der Verdrängerspirale (31) eine Gegendruckkammer (50) ausgebildet ist,
**dadurch gekennzeichnet, dass**
die Verdrängerspirale (31) mindestens zwei Durchgänge (60, 61) aufweist, die temporär eine Fluidverbindung zwischen der Gegendruckkammer (50) und zumindest einer der Verdichtungskammern (65a, 65b, 65, 65d, 65e) herstellen, wobei ein erster Durchgang (60) im Wesentlichen in einem mittleren Abschnitt (38) der Verdrängerspirale (31) ausgebildet ist und mindestens ein zweiter Durchgang (61) im Anfangsbereich (37) der Verdrängerspirale (31) ausgebildet ist, wobei der erste Durchgang (60) in einem derartigen Abschnitt der Verdrängerspirale (31) ausgebildet ist, in dem der erste Durchgang (60) im aktivierten Zustand der Verdrängermaschine bei Erreichen von 95% - 85% des relativen Verdichtungskammervolumens geöffnet ist und während einer nach der Öffnung anschließenden Rotation der Verdrängerspirale (31) um einen Rotationswinkel von 180° - 360° geöffnet bleibt.

2. Verdrängermaschine nach Anspruch 1,
**dadurch gekennzeichnet, dass**
der erste Durchgang (60) und/oder der mindestens zweite Durchgang (61) in einem Abschnitt des Bodens (34) der Verdrängerspirale (31) ausgebildet ist.

3. Verdrängermaschine nach Anspruch 1 oder 2,
**dadurch gekennzeichnet, dass**
der zweite Durchgang (61) in einem derartigen Abschnitt der Verdrängerspirale (31) ausgebildet ist, in dem der zweite Durchgang (61) bei Erreichen des maximalen Verdichtungskammervolumens Vmax geschlossen ist und während einer der Schließung vorangegangenen Rotation der Verdrängerspirale (31) um einen Rotationswinkel von 180° - 360° geöffnet ist.

4. Verdrängermaschine nach Anspruch 3,
**dadurch gekennzeichnet, dass**
das maximale Verdichtungskammervolumen Vmax einem Rotationswinkel aVmax zugeordnet ist, wobei der zweite Durchgang (61) bei Erreichen des Rotationswinkels aVmax +/- 30° geschlossen ist.

5. Verdrängermaschine nach einem der vorhergehenden Ansprüche,
**dadurch gekennzeichnet, dass**
der erste Durchgang (60) mindestens bei einem Rotationswinkel von 10 ° vor Erreichen des Ausschiebewinkels (discharge angle) geschlossen ist.

6. Verdrängermaschine nach einem der vorhergehenden Ansprüche,
**dadurch gekennzeichnet, dass**
vom Hochdruckbereich (47) der Verdrängermaschine zu der Gegendruckkammer (50) eine Gasverbindungsleitung (70) ausgebildet ist.

7. Verdrängermaschine nach Anspruch 6,
**dadurch gekennzeichnet, dass**
die Gasverbindungsleitung im Gehäuse (20) ausgebildet ist und die Hochdruckkammer (40) mit der Gegendruckkammer (50) verbindet.

8. Verdrängermaschine nach einem der vorhergehenden Ansprüche,
**dadurch gekennzeichnet, dass**
vom Hochdruckbereich (47) der Verdrängermaschine zur Niederdruckkammer (60) ein Ölrückführungskanal (75) ausgebildet ist.

9. Verdrängerspirale für eine Verdrängermaschine nach einem der Ansprüche 1 bis 8,
**gekennzeichnet durch**
mindestens zwei Durchgänge (60, 61), wobei ein erster Durchgang (60) im Wesentlichen in einem mittleren Abschnitt (38) der Verdrängerspirale (31) ausgebildet ist und mindestens ein zweiter Durchgang (61) im Anfangsbereich (37) der Verdrängerspirale (31) ausgebildet ist.

10. Verfahren zum Betreiben einer Verdrängermaschine nach einem der Ansprüche 1 bis 8,
**dadurch gekennzeichnet, dass**
der erste Durchgang (60) bei Erreichen von 95 % - 85 % des relativen Verdichtungskammervolumens geöffnet wird und während einer nach Öffnung anschließenden Rotation der Verdrängerspirale (31) um einen Rotationswinkel von 180° - 360° geöffnet bleibt.

11. Verfahren nach Anspruch 10,
**dadurch gekennzeichnet, dass**
der zweite Durchgang (61) bei Erreichen des maximalen relativen Verdichtungskammervolumens Vmax geschlossen wird und während einer der Schließung vorangegangenen Rotation der Verdrängerspirale (31) um einen Rotationswinkel von 180° - 360° geöffnet ist.

12. Fahrzeugklimaanlage mit einer Verdrängermaschine, insbesondere mit einem Scrollverdichter (10), nach einem der Ansprüche 1 bis 8.

13. Fahrzeug mit einer Verdrängermaschine nach einem der Ansprüche 1 bis 8 und/oder mit einer Fahrzeugklimaanlage nach Anspruch 12.

## Claims

1. A displacement machine according to the spiral principle, in particular a scroll compressor (10), with a high-pressure area (47) comprising a high-pressure chamber (40) and with a low-pressure chamber (30) and an orbiting displacer spiral (31), which engages into a counter-spiral (32) in such a way as to form compression chambers (65a, 65b, 65c, 65d, 65e) between the displacer spiral (31) and the counter-spiral (32), so as to receive a working medium, wherein a counterpressure chamber (50) is formed between the low-pressure chamber (30) and the displacer spiral (31), **characterized in that**
the displacer spiral (31) has at least two passages (60, 61), which temporarily establish a fluid connection between the counterpressure chamber (50) and at least one of the compression chambers (65a, 65b, 65c, 65d, 65e), wherein a first passage (60) is formed essentially in a central section (38) of the displacer spiral (31), and at least one second passage (61) is formed in the initial area (37) of the displacer spiral (31), wherein the first passage (60) is formed in a section of the displacer spiral (31) of the kind in which the first passage (60) is open in the activated state of the displacement machine once 95 %-85 % of the relative compression chamber volume has been reached, and remains open during a rotation of the displacer spiral (31) by a rotational angle of 180°-360° after opening.

2. The displacement machine according to claim 1, **characterized in that**
the first passage (60) and/or the at least second passage (61) is formed in a section of the floor (34) of the displacer spiral (31).

3. The displacement machine according to claim 1 or 2,
**characterized in that**
the second passage (61) is formed in a section of the displacer spiral (31) of the kind in which the second passage (61) is closed once the maximum compression chamber volume Vmax has been reached, and open during a rotation of the displacer spiral (31) by a rotational angle of 180°-360° that preceded the closure.

4. The displacement machine according to claim 3,
**characterized in that**
the maximum compression chamber volume Vmax is allocated to a rotational angle αVmax, wherein the second passage (61) is closed once the rotational angle αVmax of +/- 30° has been reached.

5. The displacement machine according to one of the preceding claims,
**characterized in that**
the first passage (60) is closed at least at a rotational angle of 10° before the discharge angle (discharge angle) has been reached.

6. The displacement machine according to one of the preceding claims,
**characterized in that**
a gas connecting line (70) is formed from the high-pressure area (47) of the displacement machine to the counterpressure chamber (50).

7. The displacement machine according to claim 6,
**characterized in that**
the gas connecting line is formed in the housing (20 and connects the high-pressure chamber (40) with the counterpressure chamber (50).

8. The displacement machine according to one of the preceding claims,
**characterized in that**
an oil return channel (75) is formed running from the high-pressure area (47) of the displacement machine to the low-pressure chamber (60).

9. A displacer spiral for a displacement machine according to one of claims 1 to 8,
**characterized by**
at least two passages (60, 61), wherein a first passage (60) is formed essentially in a central section (38) of the displacer spiral (31), and at least one second passage (61) is formed in the initial area (37) of the displacer spiral (31).

10. A method for operating a displacement machine according to one of claims 1 to 8,
**characterized in that**
the first passage (60) is opened once 95 %-85 % of the relative compression chamber volume has been reached, and remains open during a rotation of the displacer spiral (31) by a rotational angle of 180°-360° after opening.

11. The method according to claim 10,
**characterized in that**
the second passage (61) is closed once the maximum relative compression chamber volume Vmax has been reached, and open during a rotation of the displacer spiral (31) by a rotational angle of 180°-360° that preceded the closure.

12. A vehicle air conditioning system with a displacement machine, in particular with a scroll compressor (10), according to one of claims 1 to 8.

13. A vehicle with a displacement machine according to one of claims 1 to 8 and/or with a vehicle air conditioning system according to claim 12.

## Revendications

1. Compresseur volumétrique selon le principe de la spirale, en particulier compresseur rotatif à spirales (10), avec une zone de haute pression (47), qui comprend une chambre de haute pression (40), et avec une chambre de basse pression (30) et une spirale mobile (31) orbitale, qui vient en prise dans une contre-spirale (32) de telle manière qu'entre la spirale mobile (31) et la contre-spirale (32) sont formées des chambres de compression (65a,65b,65c,65d,65e) pour recevoir un milieu de travail, sachant qu'entre la chambre de basse pression (30) et la spirale mobile (31) est constituée une chambre de contre-pression (50)
**caractérisé en ce que**
la spirale mobile (31) comporte au moins deux passages (60, 61) qui établissent temporairement une liaison de fluide entre la chambre de contre-pression (50) et au moins une des chambres de compression (65a, 65b,65c,65d,65e), sachant qu'un premier passage (60) est constitué pour l'essentiel dans une section centrale (38) de la spirale mobile (31) et au moins un deuxième passage (61) est constitué dans la zone de début (37) de la spirale mobile (31), sachant que le premier passage (60) est constitué dans une section de même nature de la spirale mobile (31) dans laquelle le premier passage (60) est ouvert à l'état activé du compresseur volumétrique en atteignant les 95 % - 85 % du volume de la chambre de compression relatif et reste ouvert d'un angle de rotation de 180° - 360° pendant une rotation de la spirale mobile (31) consécutive à l'ouverture.

2. Compresseur volumétrique selon la revendication 1,
**caractérisé en ce que**
le premier passage (60) et/ou au moins le deuxième passage (61) est constitué dans une section du fond (34) de la spirale mobile (31).

3. Compresseur volumétrique selon la revendication 1 ou 2,
**caractérisé en ce que**
le deuxième passage (61) est constitué dans une section de même nature de la spirale mobile (31) dans laquelle le deuxième passage (61) est fermé en atteignant le volume de la chambre de compression maximal Vmax et est ouvert d'un angle de rotation de 180° - 360° pendant une rotation de la spirale mobile (31) préalable à la fermeture.

4. Compresseur volumétrique selon la revendication 3,
**caractérisé en ce que**
le volume de la chambre de compression maximal Vmax est attribué à un angle de rotation αVmax, sachant que le deuxième passage (61) est fermé en atteignant l'angle de rotation αVmax +/- 30°.

5. Compresseur volumétrique selon l'une quelconque des revendications précédentes,
**caractérisé en ce que**
le premier passage (60) est fermé au moins à un angle de rotation de 10° avant d'atteindre l'angle de décharge.

6. Compresseur volumétrique selon l'une quelconque des revendications précédentes,
**caractérisé en ce que**
une conduite de liaison de gaz (70) est constituée de la zone de haute pression (47) du compresseur volumétrique à la chambre de contre-pression (50).

7. Compresseur volumétrique selon la revendication 6,
**caractérisé en ce que**
la conduite de liaison de gaz est constituée dans le boîtier (20) et relie la chambre de haute pression (40) à la chambre de contre-pression (50).

8. Compresseur volumétrique selon l'une quelconque des revendications précédentes,
**caractérisé en ce qu'**
un conduit de retour d'huile (75) est constitué de la zone de haute pression (47) du compresseur volumétrique à la chambre de basse pression (60).

9. Spirale mobile pour un compresseur volumétrique selon l'une quelconque des revendications 1 à 8,
**caractérisé par**
au moins deux passages (60, 61), sachant qu'un premier passage (60) est constitué pour l'essentiel dans une section centrale (38) de la spirale mobile (31) et au moins un deuxième passage (61) est constitué dans la zone de début (37) de la spirale mobile (31).

10. Procédé pour faire fonctionner un compresseur volumétrique selon l'une quelconque des revendications 1 à 8,
**caractérisé en ce que**
le premier passage (60) est ouvert en atteignant les 95 % - 85 % du volume de la chambre de compression relative et reste ouvert d'un angle de rotation e 180° - 360° pendant une rotation de la spirale mobile (31) consécutive à l'ouverture.

11. Procédé selon la revendication 10,
**caractérisé en ce que**
le deuxième passage (61) est fermé en atteignant le volume de la chambre de compression maximal relatif Vmax et est ouvert d'un angle de rotation de 180° - 360° pendant une rotation de la spirale mobile (31) préalable à la fermeture.

12. Climatisation de véhicule avec un compresseur volumétrique, en particulier avec un compresseur rotatif à spirales (10), selon l'une quelconque des revendications 1 à 8.

13. Véhicule avec un compresseur volumétrique selon l'une quelconque des revendications 1 à 8, et/ou avec une climatisation de véhicule selon la revendication 12.
